(19) Europäisches Patentamt
European Patent Office
Office européen des brevets

(11) EP 3 247 730 B1

(12) **FASCICULE DE BREVET EUROPEEN**

(45) Date de publication et mention de la délivrance du brevet:
**03.07.2019 Bulletin 2019/27**

(21) Numéro de dépôt: **16703586.4**

(22) Date de dépôt: **20.01.2016**

(51) Int Cl.:
***C08G 8/04*** *(2006.01)* ***C08G 65/38*** *(2006.01)*
***B64D 33/04*** *(2006.01)* ***F02K 9/97*** *(2006.01)*
***F02K 1/00*** *(2006.01)*

(86) Numéro de dépôt international:
**PCT/FR2016/050106**

(87) Numéro de publication internationale:
**WO 2016/116699 (28.07.2016 Gazette 2016/30)**

(54) **PROCÉDÉ DE FABRICATION D'UNE RÉSINE ABLATIVE.**

VERFAHREN ZUR HERSTELLUNG EINES ABLATIVEN HARZES

METHOD FOR PRODUCING AN ABLATIVE RESIN

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.01.2015 FR 1500128**

(43) Date de publication de la demande:
**29.11.2017 Bulletin 2017/48**

(73) Titulaires:
- **ArianeGroup SAS**
  **75015 Paris (FR)**
- **Centre National de la Recherche Scientifique**
  **75016 Paris (FR)**

(72) Inventeurs:
- **FOYER, Gabriel M.**
  **33000 Bordeaux (FR)**
- **DAVID,Ghislain C.**
  **34080 Montpellier (FR)**
- **CAILLOL, Sylvain Y.**
  **34090 Montpellier (FR)**
- **RODRIGUEZ, Nadia**
  **33800 Bordeaux (FR)**

(74) Mandataire: **Laïk, Eric et al**
**Cabinet Beau de Loménie**
**158, rue de l'Université**
**75340 Paris Cedex 07 (FR)**

(56) Documents cités:
**GB-A- 707 598** **US-A- 4 684 449**
**US-A1- 2010 316 555**

- **ATARU KOBAYASHI ET AL: "Rapid Synthesis of Phenolic Resins by Microwave-Assisted Self-Condensation of Hydroxybenzyl Alcohol Derivatives", POLYMER JOURNAL, vol. 40, no. 7, 4 juin 2008 (2008-06-04), pages 590-591, XP055205889, ISSN: 0032-3896, DOI: 10.1295/polymj.PJ2008050**
- **VIJAYENDRA KUMAR ET AL: "ENZYME MEDIATED OXIDATIVE POLYMERIZATION OF 4-HYDROXYBENZYL ALCOHOL FOR OPTICAL APPLICATIONS", JOURNAL OF MACROMOLECULAR SCIENCE, PART A, vol. 39, no. 10, 11 janvier 2002 (2002-01-11), pages 1183-1193, XP055205868, ISSN: 1060-1325, DOI: 10.1081/MA-120014844**
- **Anonymous: "Réduction de la fonction aldehyde de la vanilline : concours CAPLP maths sciences 2012", , 7 mars 2012 (2012-03-07), XP055205878, Extrait de l'Internet: URL:http://www.chimix.com/an12/cap12/caplp 5.html [extrait le 2015-08-03]**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

Arrière-plan de l'invention

L'invention concerne un nouveau procédé de fabrication d'une tuyère de propulseur.

Il est connu de réaliser des tuyères de propulseurs à partir de résines phénoliques de type résole, par exemple à partir de résine ablative telle que la résine Ablaphène RS101. Les résines phénoliques utilisées pour cette application doivent présenter d'excellentes propriétés de stabilité thermique et de charbonnement.

Les résines phénoliques telles que la résine Ablaphène RS101 sont synthétisées à partir de formaldéhyde et de phénol. Il est connu que le formaldéhyde est très réactif vis-à-vis du phénol. Les résines phénoliques synthétisées à partir de ces deux composés présentent de hautes densités aromatiques et de hautes densités de réticulation, lesquelles confèrent aux résines les propriétés de stabilité thermique et de charbonnement recherchées.

Toutefois le formaldéhyde et le phénol sont des composés classés Cancérigène Mutagène Reprotoxique (CMR) de catégorie 1B et 2 respectivement.

Du fait de sa toxicité, le formaldéhyde est un composé chimique dont l'utilisation devient strictement réglementée par la législation CMR. De plus, le formaldéhyde est un composé chimique issu de ressources fossiles épuisables.

Plusieurs travaux de synthèse de résines phénoliques à partir de composés aldéhyde issus de ressources renouvelables et sans formaldéhyde ont été menés. Le formaldéhyde est alors substitué par des composés aldéhyde tels que le glyoxal [E.C. Ramires, J.D. Megiatto, C. Gardrat, A. Castellan, E. Frollini, Biobased composites from glyoxal-phenolic resins and sisal fibers, Bioresour. Technol., 101 (2010) 1998-2006.] ou le furfural [L.H. Brown, Resin-forming reactions of furfural and phenol, J. Ind. Eng. Chem., 44 (1952) 2673-2675.] par exemple. Ces composés sont moins réactifs que le formaldéhyde et peuvent conduire à l'obtention de résines phénoliques présentant des propriétés de stabilité thermique et de charbonnement insuffisantes pour la réalisation de pièces aéronautiques comme des tuyères de propulseurs. De plus, ces composés, bien que moins toxiques que le formaldéhyde, sont néanmoins classés CMR 2.

On connaît en outre le document US 2010/316555 qui décrit la préparation d'une résine phénolique par réaction entre un composé présentant une fonction méthylol et un aldéhyde.

Il existe donc un besoin pour disposer d'une nouvelle voie de synthèse de résines phénoliques permettant de s'affranchir de l'utilisation du formaldéhyde ou d'autres composés aldéhyde classés CMR.

Il existe aussi un besoin pour disposer d'une nouvelle voie de synthèse de résines phénoliques présentant des propriétés de stabilité thermique et de charbonnement adaptées à la réalisation de pièces aéronautiques comme les tuyères de propulseurs.

Objet et résumé de l'invention

A cet effet, l'invention propose un procédé selon la revendication 1. Le brevet décrit encore un procédé de fabrication d'une résine phénolique comportant les étapes suivantes :

a) réduction d'un composé de formule A afin d'obtenir un alcool hydroxybenzylique de formule B, les formules A et B étant les suivantes :

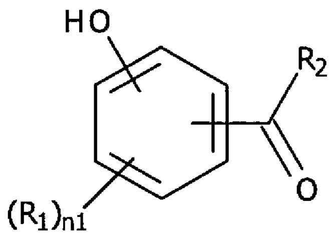

A

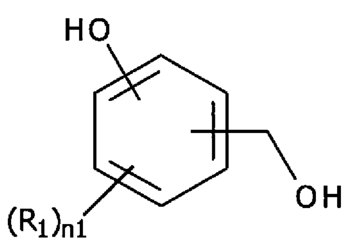

B

où :

- $n_1$ est un entier compris entre 0 et 4 et lorsque $n_1$ est supérieur ou égal à 2, les substituants $R_1$ sont identiques ou différents,
- $R_1$ est choisi parmi : -OH, -COOH, -CHO, les groupements - O-Alk où Alk désigne une chaîne alkyle substituée ou non substituée de 1 à 4 atomes de carbone, les chaînes hydrocarbonées comprenant entre 1 et 20 atomes de carbone, saturées ou insaturées, substituées ou non substituées, interrompues ou non par un ou plusieurs hétéroatomes, et présentant éventuellement une ou plusieurs fonctions carbonyle ou acide carboxylique, les groupes carbocycliques ou hétérocycliques saturés, insaturés ou aromatiques, monocycliques ou polycycliques, substitués ou non substitués, et présentant éventuellement une ou plusieurs fonctions carbonyle ou acide carboxylique, les groupements aryles substitués ou non substitués et présentant éventuellement une ou plusieurs fonctions carbonyle ou acide carboxylique, et
- $R_2$ désigne -H ou -OH, et

b) réaction de polymérisation mettant en oeuvre l'alcool hydroxybenzylique de formule B obtenu lors de l'étape a) afin d'obtenir la résine phénolique.

Il est obtenu lors de l'étape a), sans mettre en oeuvre de formaldéhyde, un composé B présentant au moins une fonction méthylol laquelle constitue une fonction très réactive dans la synthèse d'une résine phénolique. Ce type de composé B est, dans l'art antérieur, normalement obtenu par addition de formaldéhyde sur un composé phénolique. Ainsi, l'invention permet avantageusement du fait de l'utilisation d'un composé de formule A d'obtenir le même type de composé que lorsque du formaldéhyde est utilisé tout en s'affranchissant de l'utilisation de formaldéhyde. L'invention fournit une nouvelle méthode de fabrication de résines phénoliques présentant des propriétés de stabilité thermique et de charbonnement similaires à celles de la résine Ablaphène RS101 dans laquelle le formaldéhyde n'est pas mis en oeuvre.

La résine phénolique obtenue à l'issue de l'étape b) peut être un pré-polymère, c'est-à-dire présenter des groupes réactifs lui permettant de participer à une réaction de réticulation ultérieure. En variante, on peut obtenir à l'issue de l'étape b) une résine phénolique réticulée. Dans ce dernier cas, il y a d'abord lors de l'étape b) formation d'une résine phénolique formant un pré-polymère, une réaction de réticulation ayant ensuite lieu afin d'obtenir la résine phénolique réticulée. La réticulation est réalisée par traitement thermique.

De préférence, $R_1$ peut être choisi parmi : -OH, -OAlk où Alk désigne une chaîne alkyle substituée ou non substituée de 1 à 4 atomes de carbone, de préférence -OMe, -CHO, -COOH et les groupements aryles substitués ou non substitués et présentant éventuellement une ou plusieurs fonctions carbonyle ou acide carboxylique.

De préférence encore, $R_1$ peut être choisi parmi : -CHO, -OH, - OMe et les groupements aryles substitués ou non substitués et présentant éventuellement une ou plusieurs fonctions carbonyle ou acide carboxylique.

De manière particulièrement préférée, $R_1$ peut désigner -OH.

$n_1$ peut de préférence être compris entre 0 et 3. $n_1$ peut de manière particulièrement préférée être compris entre 0 et 1.

Il est bien entendu souhaitable de limiter la quantité de produits toxiques mis en oeuvre avec l'alcool hydroxybenzylique de formule B lors de l'étape b).

Ainsi, il peut, dans cette optique, être avantageux qu'il y ait homopolymérisation de l'alcool hydroxybenzylique de formule B lors de l'étape b).

Toujours dans l'optique de limiter la toxicité des produits employés lors de l'étape b) et afin de synthétiser des résines phénoliques avec des densités de réticulation supérieures, il peut, dans un exemple de réalisation, y avoir également réaction de l'alcool hydroxybenzylique de formule B avec un aldéhyde différent du formaldéhyde lors de l'étape b).

En particulier, cet aldéhyde peut être un aldéhyde aromatique mono- ou poly-fonctionnel. En particulier, cet aldéhyde peut être choisi parmi le benzaldéhyde, le téréphthalaldéhyde, le trimésaldéhyde ou peut présenter l'une des deux formules C ou D suivantes :

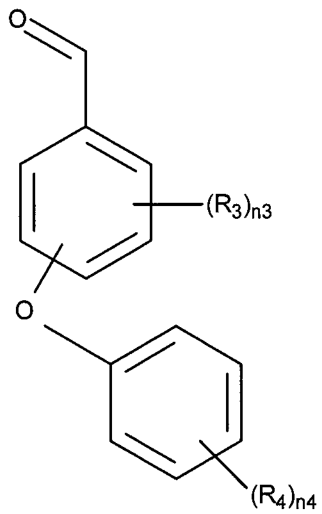

C

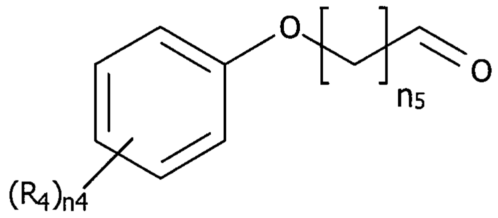

D

dans les formules C et D, $n_3$ est un entier compris entre 0 et 4 et lorsque $n_3$ est supérieur ou égal à 2, les substituants $R_3$ sont identiques ou différents, $n_4$ est un entier compris entre 0 et 5 et lorsque $n_4$ est supérieur ou égal à 2, les substituants $R_4$ sont identiques ou différents et $n_5$ est un entier compris entre 1 et 6, et les substituants $R_3$ et $R_4$ étant choisis indépendamment l'un de l'autre parmi : -OH, -COOH, -CHO, les groupements -O-Alk où Alk désigne une chaîne alkyle substituée ou non substituée de 1 à 4 atomes de carbone, les chaînes hydrocarbonées comprenant entre 1 et 20 atomes de carbone, saturées ou insaturées, substituées ou non substituées, interrompues ou non par un ou plusieurs hétéroatomes, et présentant éventuellement une ou plusieurs fonctions carbonyle ou acide carboxylique, les groupes carbocycliques ou hétérocycliques saturés, insaturés ou aromatiques, monocycliques ou polycycliques, substitués ou non substitués, et présentant éventuellement une ou plusieurs fonctions carbonyle ou acide carboxylique, les groupements aryles substitués ou non substitués et présentant éventuellement une ou plusieurs fonctions carbonyle ou acide carboxylique,

$R_4$ pouvant en outre désigner un radical de formule C1 dans la formule C ci-dessus ou un radical de formule D1 dans la formule D ci-dessus et $R_3$ pouvant en outre désigner un radical de formule C2 dans la formule C ci-dessus, les formules C1, C2 et D1 étant les suivantes :

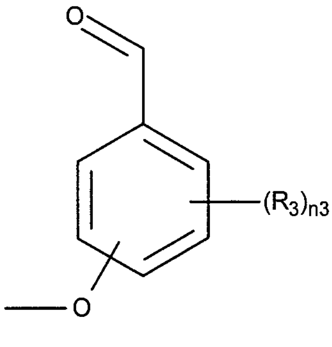

C1

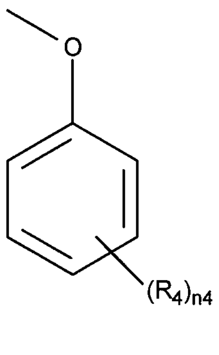

C2

5

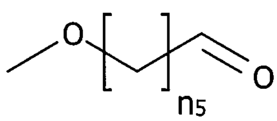

D1

De préférence, les substituants $R_3$ et $R_4$ peuvent être choisis indépendamment l'un de l'autre parmi : -CHO, -OH, -OMe et les groupements aryles substitués ou non substitués et présentant éventuellement une ou plusieurs fonctions carbonyle ou acide carboxylique.

Lorsqu'un aldéhyde réagit avec l'alcool hydroxybenzylique de formule B lors de l'étape b), il peut être avantageux que cet aldéhyde soit polyfonctionnel et, par exemple, soit un composé polyaldéhyde aromatique (i.e. un composé aldéhyde aromatique présentant plusieurs fonctions aldéhyde). Le caractère polyfonctionnel et aromatique d'un tel aldéhyde contribue à augmenter encore la densité de réticulation et la densité aromatique de la résine obtenue après réticulation et, par conséquent, à augmenter encore les propriétés de stabilité thermique et de charbonnement de cette résine.

Dans le cas où $R_4$ désigne un radical de formule C1 dans la formule C ci-dessus, il faut comprendre que le composé C présente la formule suivante :

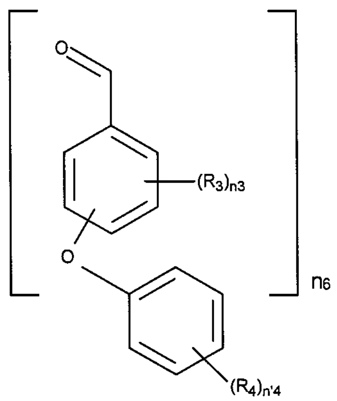

où $n_6$ est un entier compris entre 2 et 6 et $n'_4$ est un entier compris entre 0 et $6-n_6$ avec $n'_4 = n_4 - (n_6 - 1)$ et avec $R_3$, $R_4$ et $n_3$ tels que définis ci-dessus. Il peut être avantageux d'utiliser un tel composé polyaldéhyde aromatique car il contribue à augmenter encore la densité de réticulation et la densité aromatique de la résine obtenue lui conférant ainsi d'excellentes propriétés de stabilité thermique et de charbonnement. De plus, du fait de sa masse molaire supérieure, un tel composé polyaldéhyde aromatique présentera une volatilité et une toxicité fortement diminuée par rapport au formaldéhyde.

Dans le cas où $R_4$ désigne un radical de formule D1 dans la formule D ci-dessus, il faut comprendre que le composé D présente la formule suivante :

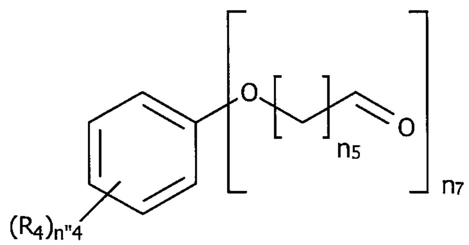

où $n_7$ est un entier compris entre 2 et 6 et $n''_4$ est un entier compris entre 0 et $6-n_7$ avec $n''_4 = n_4 - (n_7 - 1)$ et avec $R_4$ et $n_5$ tels que définis ci-dessus. Il peut être avantageux d'utiliser un tel composé polyaldéhyde aromatique car il contribue à augmenter encore la densité de réticulation et la densité aromatique de la résine obtenue lui conférant ainsi d'excellentes propriétés de stabilité thermique et de charbonnement. De plus, du fait de sa masse molaire supérieure, un tel composé polyaldéhyde aromatique présentera une volatilité et une toxicité fortement diminuée par rapport au formaldéhyde.

Dans le cas où $R_3$ désigne un radical de formule C2 dans la formule C ci-dessus, il faut comprendre que le composé C présente la formule suivante :

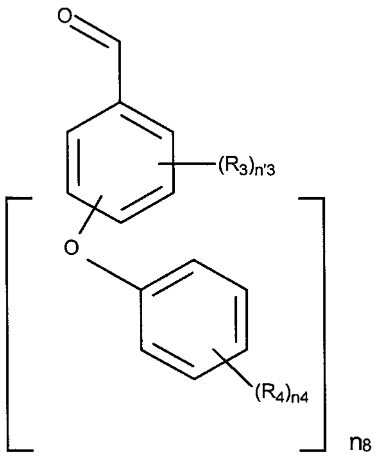

où $n_8$ est un entier compris entre 2 et 5 et $n'_3$ est un entier compris entre 0 et 5-$n_8$ avec $n'_3 = n_3 - (n_8 - 1)$ et avec $R_3$, $R_4$ et $n_4$ tels que définis ci-dessus.

Dans un exemple de réalisation, l'aldéhyde mis en oeuvre lors de l'étape b) peut présenter la formule C et le procédé peut, en outre, comporter avant l'étape b) une étape de fabrication dudit aldéhyde par réaction de substitution nucléophile aromatique entre un composé ayant la formule C3 et un composé ayant la formule C4 où X' désigne un groupe partant, les formules C3 et C4 étant les suivantes :

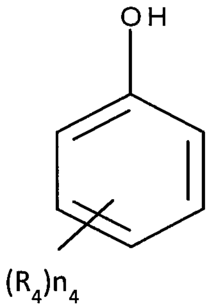

C3

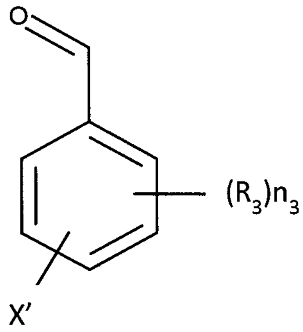

C4

Dans les formules C3 et C4, $R_3$, $R_4$, $n_3$ et $n_4$ sont tels que définis plus haut.

Le groupe partant X' peut par exemple être un atome d'halogène ou un groupement nitro $-NO_2$, le groupe partant étant de préférence un atome d'halogène.

En variante, l'aldéhyde mis en oeuvre lors de l'étape b) peut présenter la formule D et le procédé peut, en outre, comporter avant l'étape b) les deux étapes suivantes :

1) une réaction de substitution nucléophile entre un composé de formule C3 et un composé de formule D2 afin d'obtenir un composé de formule D3, où Z est un groupement protecteur permettant d'obtenir une fonction aldéhyde après déprotection et Y est un groupe partant, et
2) une réaction de déprotection du composé de formule D3 afin d'obtenir l'aldéhyde de formule D, les formules C3, D2, D3 étant les suivantes :

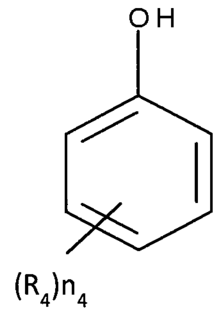

C3

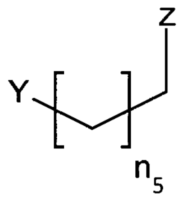

D2

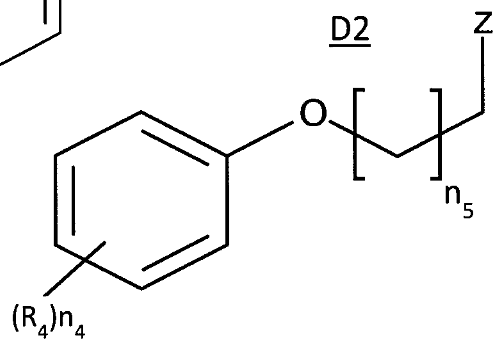

D3

Dans les formules C3, D2 et D3, $R_4$, $n_4$ et $n_5$ sont tels que définis plus haut. Le groupe partant Y peut par exemple être un atome d'halogène. Le groupement Z peut par exemple être un groupement acétal. En variante, le groupement Z peut être une fonction imine.

De préférence, les substituants $R_3$ et $R_4$ peuvent être choisis indépendamment l'un de l'autre parmi : -OH, les groupements -O-Alk où Alk désigne une chaîne alkyle substituée ou non substituée de 1 à 4 atomes de carbone, de préférence -OMe, et COOH, $R_4$ pouvant en outre désigner un radical de formule C1 dans la formule C ci-dessus ou un radical de formule D1 dans la formule D ci-dessus et $R_3$ pouvant en outre désigner un radical de formule C2 dans la formule C ci-dessus, dans les formules C1, C2 et D1, $R_3$ et $R_4$ sont tels que définis plus haut dans ce paragraphe. Dans les formules C1, C2 et D1, $n_3$, $n_4$ et $n_5$ sont tels que définis plus haut.

De préférence, $n_3$ peut être compris entre 0 et 2 et $n_4$ peut être compris entre 0 et 3 pour la formule C. Dans cet exemple de réalisation, $n_3$ peut de préférence être égal à 0.

De préférence, $n_4$ peut être compris entre 0 et 3 et $n_5$ peut être compris entre 1 et 3 pour la formule D.

De préférence, le composé de formule C3 qui peut être mis en oeuvre pour fabriquer l'aldéhyde peut être choisi parmi : les phénols simples, les composés polyphénoliques, par exemple les composés diphénoliques, les aldéhydes hydroxybenzoïques, les acides hydroxybenzoïques, les alcools hydroxybenzyliques, les alcools hydroxycinnamyliques, les acides hydroxycinnamiques, les phénylpropènes, les coumarines, les naphtoquinones, les stilbénoïdes, les flavonoïdes, les iso-flavonoïdes, les anthocyanes, les lignanes, les lignines, les tanins condensés, les tanins hydrolysables, les tanins dépolymérisés et les résines résoles et novolaques.

De préférence encore, le composé de formule C3 qui peut être mis en oeuvre pour fabriquer l'aldéhyde peut être choisi parmi : les phénols simples, les composés polyphénoliques, par exemple les composés diphénoliques, les aldéhydes hydroxybenzoïques, les acides hydroxybenzoïques, les alcools hydroxybenzyliques, les résines résoles et novolaques.

De manière particulièrement préférée, le composé de formule C3 mis en oeuvre pour fabriquer l'aldéhyde peut être choisi parmi : les phénols simples, par exemple le phénol, le résorcinol ou le phloroglucinol, et les aldéhydes hydroxybenzoïques, par exemple le para-hydroxybenzaldéhyde, la vanilline ou le syringaldéhyde.

Par exemple, le composé de formule C3 mis en oeuvre pour fabriquer l'aldéhyde peut être choisi parmi : le phénol, le pyrocatéchol, le résorcinol, l'hydroquinone, le phloroglucinol, le pyrogallol, le guaiacol, le syringol, le bisphénol A, le bis-phénol S, le para-hydroxybenzaldéhyde, la vanilline, le syringaldéhyde, la déhydrodivanilline, l'alcool 2-hydroxybenzylique, l'alcool 4-hydroxybenzylique, l'alcool vanillique, l'alcool syringique, l'alcool paracoumarylique, l'alcool coniférylique, l'alcool sinapylique, l'acide férulique, l'acide parahydroxybenzoïque, l'acide vanillique, l'acide syringique, l'acide gallique, l'acide paracoumarique, l'eugénol, l'isoeugénol, les cardanols, les cardols, les acides anacardiques, la catéchine, l'ombelliférone, la juglone, le trans-resvératrol, le kaempférol, la daidzéine, le delphinidol, l'entérodiol, les lignines, les procyanidines, les gallotanins, les tanins condensés, les résines résoles et novolaques.

De tels exemples de composés C3 peuvent être produits à partir de ressources renouvelables et peuvent avantageusement être mis en oeuvre dans le cadre de l'invention.

Par exemple, le composé de formule C3 mis en oeuvre pour fabriquer l'aldéhyde peut être choisi parmi : le phénol, le résorcinol, le phloroglucinol, le bisphénol-A, le bisphénol-S, l'alcool 2-hydroxybenzylique, l'alcool 4-hydroxybenzylique, l'alcool vanillique, le para-hydroxybenzaldéhyde, la vanilline, les résines résoles et novolaques.

Dans un exemple de réalisation, il peut y avoir, lors de l'étape b), réaction de l'alcool hydroxybenzylique de

formule B avec un composé phénolique différent dudit alcool hydroxybenzylique.

Par composé phénolique, il faut comprendre une molécule organique comprenant au moins un noyau benzénique auquel est rattaché au moins un groupement hydroxyle (-OH).

Dans un exemple de réalisation, le composé phénolique réagissant avec l'alcool hydroxybenzylique lors de l'étape b) peut être choisi parmi : les phénols simples et les composés polyphénoliques, par exemple les composés diphénoliques, les phénols et composés polyphénoliques pouvant éventuellement être substitués par des groupements alcoxyles par exemple.

Le composé phénolique réagissant avec l'alcool hydroxybenzylique lors de l'étape b) peut, par exemple, être choisi parmi : le phénol, le pyrocatéchol, le résorcinol, l'hydroquinone, le phloroglucinol, le pyrogallol, le guaiacol, le syringol, le bis-phénol A, le bis-phénol S, le para-hydroxybenzaldéhyde, la vanilline, le syringaldéhyde, la déhydrodivanilline, l'alcool 2-hydroxybenzylique, l'alcool 4-hydroxybenzylique, l'alcool vanillique, l'alcool syringique, l'alcool paracoumarylique, l'alcool coniférylique, l'alcool sinapylique, l'acide férulique, l'acide sinapylique, l'acide parahydroxybenzoïque, l'acide vanillique, l'acide syringique, l'acide gallique, l'acide paracoumarique, l'eugénol, l'isoeugénol, les cardanols, les cardols, les acides anacardiques, la catéchine, l'ombelliférone, la juglone, le trans-resvératrol, le kaempférol, la daidzéine, le delphinidol, l'entérodiol, les lignines, les procyanidines, les gallotanins, les tanins condensés, les résines résoles et novolaques.

De tels exemples de composés phénoliques peuvent être produits à partir de ressources renouvelables et peuvent avantageusement être mis en oeuvre dans le cadre de l'invention.

Le composé phénolique réagissant avec l'alcool hydroxybenzylique lors de l'étape b) peut, par exemple, être choisi parmi : le phénol, le pyrocatéchol, le résorcinol, l'hydroquinone, le phloroglucinol, le bis-phénol A, le bis-phénol S, le para-hydroxybenzaldéhyde, la vanilline, les résines résoles et novolaques, les procyanidines et les tanins condensés.

Dans un exemple de réalisation avantageux, le composé phénolique réagissant lors de l'étape b) avec l'alcool hydroxybenzylique de formule B peut avantageusement être différent du phénol. Un tel mode de réalisation permet avantageusement de limiter l'utilisation de phénol lequel est un composé classé CMR.

Dans un exemple de réalisation, $R_2$ peut désigner -OH et le composé de formule A peut être formé, avant l'étape a), par une réaction de carboxylation de Kolbe-Schmitt à partir d'un composé de formule A1, la formule A1 étant la suivante :

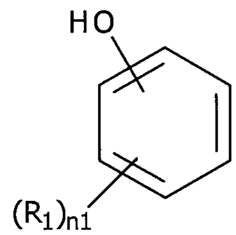

A1

Dans la formule A1, $R_1$ et $n_1$ sont tels que définis plus haut.

En variante, $R_2$ peut désigner -H et le composé de formule A peut être formé, avant l'étape a), par une réaction de formylation, par exemple de carbonylation, d'un composé de formule A1 ou par une réaction d'oxydation d'un composé de formule A2, les formules A1 et A2 étant les suivantes :

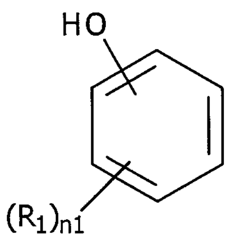

A1

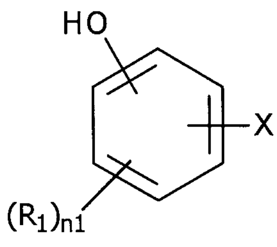

A2

dans la formule A2, X est un groupement formant -CHO après une réaction d'oxydation et, dans les formules A1 et A2, $R_1$ et $n_1$ sont tels que définis plus haut.

Des réactions de formylation de composés de formule A1 sont par exemple décrites dans la publication : « Zeolites as Shape-Selective Catalysts : Highly Selective Synthesis of Vanillin from Reimer-Tiemann Reaction of Guaiacol and Chloroform » de S. Ren; Z. Wu; Q. Guo; B. Shen (Catal Lett, 2014, 1). Le groupement X peut par exemple être une chaîne alkyle, par exemple un groupement $-CH_3$, laquelle peut former après une réaction d'oxydation -CHO.

Dans un exemple de réalisation, le composé de formule A1 ou A2 peut être choisi parmi : les phénols simples, les composés polyphénoliques, par exemple les composés diphénoliques, les aldéhydes hydroxybenzoïques, les acides hydroxybenzoïques, les alcools hydroxybenzyliques, les alcools hydroxycinnamyliques, les acides hydroxycinnamiques, les phénylpropènes, les coumarines, les naphtoquinones, les stilbénoïdes, les flavonoïdes, les iso-flavonoïdes, les anthocyanes, les lignanes, les lignines, les tanins condensés, les tanins hydrolysables, les tanins dépolymérisés et les résines résoles et novolaques.

Dans un exemple de réalisation, le composé de formule A1 ou A2 peut être choisi parmi : les phénols simples, les composés polyphénoliques, par exemple les composés diphénoliques, les aldéhydes hydroxybenzoïques, les acides hydroxybenzoïques, les alcools hydroxybenzyliques, les résines résoles et novolaques.

Le composé de formule A1 peut, par exemple, être choisi parmi : le phénol, le pyrocatéchol, le résorcinol, l'hydroquinone, le phloroglucinol, le pyrogallol, le guaiacol, le bis-phénol A, le bis-phénol S, le para-hydroxybenzaldéhyde, la vanilline, la déhydrodivanilline, l'alcool 2-hydroxybenzylique, l'alcool 4-hydroxybenzylique, l'alcool vanillique, l'alcool paracoumarylique, l'alcool coniférylique, l'alcool sinapylique, l'acide férulique, l'acide parahydroxybenzoïque, l'acide paracoumarique, l'eugénol, l'isoeugénol, les cardanols, les cardols, les acides anacardiques, l'ombelliférone, la juglone, le trans-resvératrol, le kaempférol, la daidzéine, le delphinidol, l'entérodiol, les lignines, les procyanidines, les gallotanins, les tanins condensés, les résines résoles et novolaques.

Le composé de formule A1 peut, par exemple, être choisi parmi : le phénol, le pyrocatéchol, le résorcinol, l'hydroquinone, le phloroglucinol, le bis-phénol A, le bis-phénol S, le para-hydroxybenzaldéhyde, la vanilline, les résines résoles et novolaques.

Le composé de formule A1 peut, de préférence, être choisi parmi : le phénol, le résorcinol et le phloroglucinol.

De tels exemples de composés peuvent être produits à partir de ressources renouvelables et peuvent avantageusement être mis en oeuvre dans le cadre de l'invention.

Le composé de formule A2 peut, par exemple, être choisi parmi : les crésols, les xylènols, les alcools hydroxycinnamyliques, les phénylpropènes, les stilbénoïdes et les lignines. Le composé de formule A2 peut, par exemple, être choisi parmi : les crésols et les xylènols.

Le composé de formule A2 peut, de préférence, être choisi parmi : l'ortho-crésol, le para-crésol, le xylènol, l'alcool paracoumarylique, l'alcool coniférylique, l'eugénol, l'isoeugénol et les lignines. Le composé de formule A2 peut, de préférence encore, être choisi parmi : l'ortho-crésol, le para-crésol et le xylènol.

De tels exemples de composés peuvent être produits à partir de ressources renouvelables et peuvent avantageusement être mis en oeuvre dans le cadre de l'invention.

La présente invention vise un procédé de fabrication d'une tuyère de propulseur dans lequel la tuyère est fabriquée à partir d'une résine phénolique obtenue par mise en oeuvre d'un procédé tel que décrit plus haut.

La tuyère de propulseur peut être en matériau composite. Dans ce cas, la fabrication de la tuyère peut comporter une première étape de formation d'une préforme fibreuse de la tuyère à obtenir imprégnée par la résine phénolique obtenue comme décrit plus haut. Cette fabrication peut en outre comporter une deuxième étape de cuisson de la préforme fibreuse imprégnée de manière à réticuler la résine phénolique et obtenir la tuyère de propulseur.

La préforme fibreuse peut par exemple comporter des fibres de carbone, de silice, de verre ou d'un matériau céramique, par exemple de carbure de silicium. La préforme fibreuse destinée à former le renfort fibreux de la tuyère peut être formée de diverses manières (drapage de couches de tissu pré-imprégnées par la résine phénolique, par exemple).

## Brève description des dessins

D'autres caractéristiques et avantages de l'invention ressortiront de la description suivante en référence au dessin annexé, sur lequel :

- la figure 1 représente des résultats d'analyses thermogravimétriques comparant les propriétés de résines obtenues par un procédé selon l'invention et de la résine Ablaphène RS 101.

## Exemples

*Exemple 1 : synthèse d'une résine phénolique par homopolymérisation de l'alcool 2-hydroxybenzylique*

Dans un premier temps, l'acide 2-hydroxybenzoïque a été synthétisé par mise en oeuvre du procédé décrit ci-dessous.

Le phénol (5g, 1 éq., 53 mmol) et le carbonate de potassium (14,7 g, 2 éq., 106 mmol) sont introduits dans un réacteur autoclave de 50 mL muni d'un système d'agitation mécanique. Le réacteur est placé à 200°C et le dioxyde de carbone est progressivement introduit jusqu'à atteindre une pression de 80 bars dans le réacteur. Après 6 heures de

réaction, le réacteur est progressivement refroidi jusqu'à température ambiante puis dégazé. Le milieu est récupéré et le pH est neutralisé avec une solution d'acide sulfurique concentrée à 1 mol/L. Le produit acide 2-hydroxybenzoïque est purifié par extraction liquide-liquide avec AcOEt/$H_2O$. Les phases organiques sont récupérées, séchées sur du sulfate de magnésium anhydre et concentrées sous pression réduite. Le produit est purifié par chromatographie séparative avec un mélange d'éluant AcOEt/Cyclohexane : 10/90. 4,1g de produit est récupéré. Le produit caractérisé par RMN $^1H$ et $^{13}C$ est pur. Aspect : Poudre blanche. Rendement massique = 55%. La réaction effectuée est résumée ci-dessous.

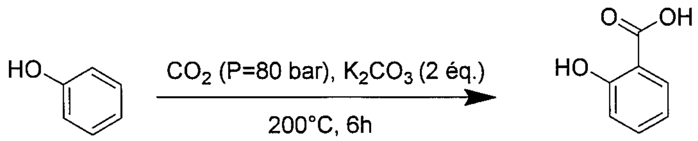


1 éq.

phénol

acide 2-hydroxybenzoïque

L'alcool 2-hydroxybenzylique a ensuite été obtenu par réduction de l'acide 2-hydroxybenzoïque obtenu précédemment.

L'acide 2-hydroxybenzoïque (4 g, 1 éq., 29 mmol), le triflate de cuivre (0,52 g, 5% éq., 1,5 mmol) et le 1,1,3,3-tétraméthyldisilazane (15,5 g, 4 éq., 116 mmol) et 45 mL de 2-méthyltétrahydrofurane sont introduits dans un ballon de 100 mL muni d'une agitation magnétique, sous atmosphère d'azote. Le ballon est placé sur un bain d'huile thermostaté à 80°C pendant 16 heures. A l'issue de cette réaction, 120 mL d'eau distillée est ajouté au milieu réactionnel. Le produit est purifié par extraction liquide-liquide AcOEt/$H_2O$. Les phases organiques sont récupérées, séchées sur du sulfate de magnésium anhydre et concentrées sous pression réduite. Le produit est purifié par chromatographie séparative avec un mélange d'éluant AcOEt/Cyclohexane : 30/70. 2,3g de produit est récupéré. Le produit caractérisé par RMN $^1H$ et $^{13}C$ est pur. Aspect : Poudre blanche. Rendement massique = 64%. La réaction effectuée est résumée ci-dessous.

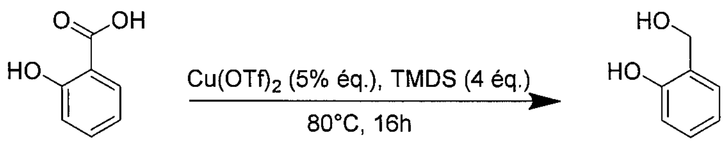


1 éq.

acide 2-hydroxybenzoïque

alcool 2-hydroxybenzylique

Une résine phénolique a ensuite été synthétisée sans phénol et sans formaldéhyde par homopolymérisation de l'alcool 2-hydroxybenzylique obtenu précédemment.

L'alcool 2-hydroxybenzylique (10 g, 1 éq., 80,6 mmol), l'hydroxyde de sodium en solution aqueuse à 50 % massique (0,9 g, 0,3 éq., 0,23 mmol) et 8 mL d'eau sont placés dans un ballon de 50 mL muni d'un réfrigérant sous agitation magnétique. Le ballon est plongé dans un bain d'huile thermostaté à 130°C pendant 4 heures. A l'issue de cette réaction, le mélange est sous forme de résitol, homogène et visqueux. Il est récupéré, placé dans une coupelle en aluminium et cuit à l'étuve, sous pression atmosphérique, suivant un programme de cuisson constitué d'une montée en température de 40°C à 180°C à la vitesse de 3°C/heure et d'un isotherme de 24 heures à 180°C. Le matériau résite obtenu à l'issue de cette cuisson est brun, rigide et totalement insoluble dans l'acétone. La polymérisation effectuée est résumée ci-dessous.

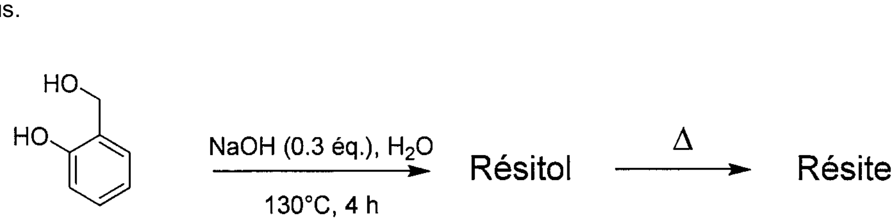


1 éq.

alcool 2-hydroxybenzylique

*Exemple 2 : Synthèse d'une résine phénolique sans phénol et sans formaldéhyde à partir d'alcool 2-hydroxybenzylique et de benzaldéhyde*

L'alcool 2-hydroxybenzylique obtenu par mise en oeuvre de l'exemple 1 (5 g, 1 éq., 40,3 mmol), le benzaldéhyde (2,14 g, 0,5 éq., 20,1 mmol) et l'hydroxyde de sodium en solution aqueuse à 50 % massique (0,35 g, 0,2 éq., 9 mmol) sont placés dans un ballon de 50 mL muni d'un réfrigérant sous agitation magnétique. Le ballon est plongé dans un bain d'huile thermostaté à 130°C pendant 30 minutes. A l'issue de cette réaction, le mélange est sous forme de résitol, homogène et visqueux. Il est récupéré, placé dans une coupelle en aluminium et cuit à l'étuve, sous pression atmosphérique, suivant un programme de cuisson constitué d'une montée en température de 40°C à 180°C à la vitesse de 3°C/heure et d'un isotherme de 24 heures à 180°C. Le matériau résite obtenu à l'issue de cette cuisson est noir, rigide et totalement insoluble dans l'acétone. La polymérisation effectuée est résumée ci-dessous.

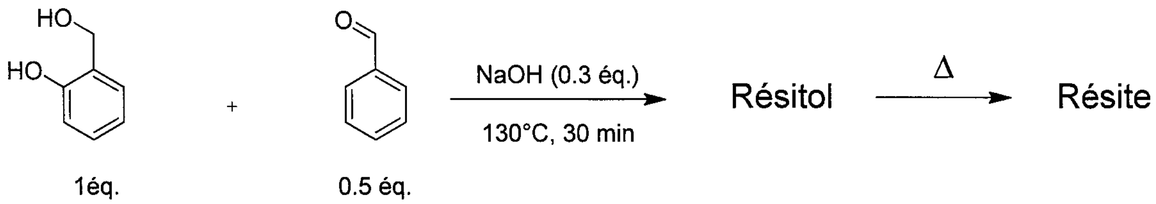


1éq. 0.5 éq.

alcool 2-hydroxybenzylique benzaldéhyde

*Exemple 3 : Synthèse d'une résine phénolique sans phénol et sans formaldéhyde à partir d'alcool 2-hydroxybenzylique et de téréphthalaldéhyde*

L'alcool 2-hydroxybenzylique obtenu par mise en oeuvre de l'exemple 1 (5 g, 1 éq., 40,3 mmol), le téréphthalaldéhyde (1,35 g, 0,25 éq., 10,1 mmol) et l'hydroxyde de sodium en solution aqueuse à 50 % massique (0,48 g, 0,3 éq., 12,1 mmol) sont placés dans un ballon de 50 mL muni d'un réfrigérant sous agitation magnétique. Le ballon est plongé dans un bain d'huile thermostaté à 130°C pendant 15 minutes. A l'issue de cette réaction, le mélange est sous forme de résitol, homogène et visqueux. Il est récupéré, placé dans une coupelle en aluminium et cuit à l'étuve, sous pression atmosphérique, suivant un programme de cuisson constitué d'une montée en température de 40°C à 180°C à la vitesse de 3°C/heure et d'un isotherme de 24 heures à 180°C. Le matériau résite obtenu à l'issue de cette cuisson est noir, rigide et totalement insoluble dans l'acétone. La polymérisation effectuée est résumée ci-dessous.

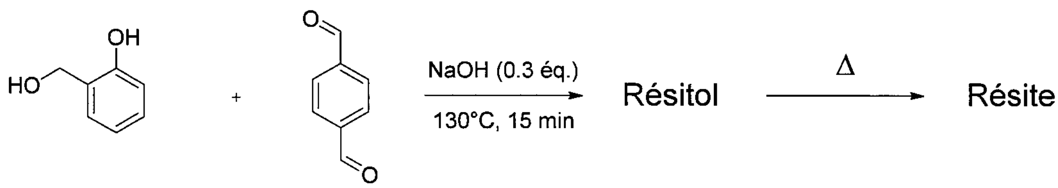


1 éq. 0.25 éq.

alcool 2-hydroxybenzylique téréphthalaldéhyde

*Exemple 4 : synthèse d'une résine phénolique sans phénol et sans formaldéhyde par homopolymérisation de l'alcool vanillique*

Dans un premier temps, l'alcool vanillique a été synthétisé.

La vanilline (5 g, 1 éq., 32,9 mmol) est dissoute dans 10 mL d'éthanol et cette solution est versée dans un ballon bicol de 50 mL muni d'un réfrigérant, d'une agitation magnétique et d'une ampoule de coulée. Le borohydrure de sodium (1,86 g, 1,5 éq., 49,3 mmol) est dissout dans 5 mL de solution d'hydroxyde de sodium concentrée à 1 mol/L et cette solution est versée dans l'ampoule de coulée. Le ballon est plongé dans un bain de glace et la solution de borohydrure de sodium est ajoutée au goutte à goutte dans le ballon. A la fin de l'addition, le bain de glace est retiré et le milieu réactionnel est laissé sous agitation à température ambiante pendant une heure. A l'issue de cette réaction, le pH du milieu réactionnel est lentement diminué jusqu'à 6 grâce à une addition au goutte à goutte d'une solution d'acide chlorhydrique concentrée à 1 mol/L. Le produit est purifié par extraction liquide-liquide $AcOEt/H_2O$. Les phases organiques sont récupérées, séchées sur du sulfate de magnésium anhydre et concentrées sous pression réduite. 4,5 g de

produit est récupéré. Le produit caractérisé par RMN 1H et 13C est pur. Aspect : Poudre beige. Rendement massique = 89%. La réaction effectuée est résumée ci-dessous.

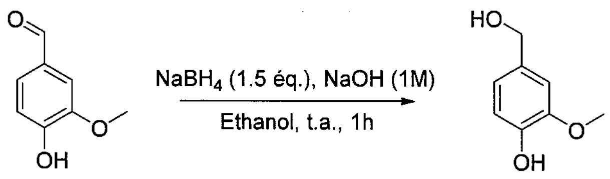


1 éq.

vanilline

alcool vanillique

Une résine phénolique a ensuite été obtenue sans phénol et sans formaldéhyde par homopolymérisation de l'alcool vanillique.

L'alcool vanillique (10 g, 1 éq., 64,9 mmol), l'hydroxyde de sodium en solution aqueuse à 50 % massique (0,9 g, 0,3 éq., 0,23 mmol) et 8 mL d'eau sont placés dans un ballon de 50 mL muni d'un réfrigérant sous agitation magnétique. Le ballon est plongé dans un bain d'huile thermostaté à 130°C pendant 2 heures. A l'issue de cette réaction, le mélange est sous forme de résitol, homogène et visqueux. Il est récupéré, placé dans une coupelle en aluminium et cuit à l'étuve, sous pression atmosphérique, suivant un programme de cuisson constitué d'une montée en température de 40°C à 180°C à la vitesse de 3°C/heure et d'un isotherme de 24 heures à 180°C. Le matériau résite obtenu à l'issue de cette cuisson est noir et rigide.

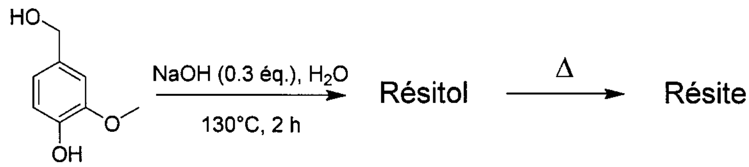


1 éq.

alcool vanillique

*Exemple 5 : analyse des propriétés de stabilité thermique et de charbonnement des résines phénoliques réticulées obtenues*

Les mesures de taux de coke des résites synthétisés ont été effectuées par analyses thermogravimétriques (ATG) sur un appareil Q50 commercialisé par la société TA Instrument. Un échantillon de résite sous forme monolithique de 30 mg est placé sur une nacelle en platine puis chauffé, sous un flux d'azote (60 mL/min) selon le programme suivant :

Montée linéaire de 20°C à 160°C à la vitesse de 10°C/min
Isotherme d'une heure à 160°C (mi)
Montée linéaire de 160°C à 900°C à la vitesse de 10°C/min
Isotherme d'une heure à 900°C (mf)

Le taux de coke est calculé selon l'équation suivante dans laquelle les grandeurs mi et mf correspondent aux masses de l'échantillon à la fin des isothermes à 160°C et 900°C respectivement :

$$\text{Taux de coke} = mf/mi$$

La figure 1 représente les résultats obtenus par ATG pour les résines synthétisées aux exemples 2 (résite benzaldéhyde/alcool 2-hydroxybenzylique), 3 (résite téréphthalaldéhyde/alcool 2-hydroxybenzylique) et 4 (résite alcool vanillique) en comparaison avec les résultats obtenus pour l'Ablaphène RS101.

Les taux de coke ainsi que les températures de dégradation à 10% massique (Td10%) des résines testées sont reportées au tableau 1 ci-dessous.

Tableau 1

| Résite | Td10% | Taux de coke |
|---|---|---|
| Benzaldéhyde/ Alcool 2-hydroxybenzylique | 490°C | 62% |
| Téréphthalaldéhyde/Alcool 2-hydroxybenzylique | 548°C | 70% |
| Alcool vanillique | 334°C | 51% |
| Ablaphène RS101 | 370°C | 63% |

Ces résultats montrent que les résines fabriquées par le procédé selon l'invention peuvent présenter des propriétés de stabilité thermique et de charbonnement similaires, voire supérieures, à celles de la résine Ablaphène RS101 de référence. Ce procédé donne donc accès à des résines phénoliques qui peuvent avantageusement substituer les résines formo-phénoliques conventionnelles pour l'élaboration de pièces aéronautiques comme des tuyères de propulseur.

L'expression « comportant/contenant/comprenant un(e) » doit se comprendre comme « comportant/contenant/comprenant au moins un(e) ».

L'expression « compris(e) entre ... et ... » ou « allant de ... à ... » doit se comprendre comme incluant les bornes.

## Revendications

1. Procédé de fabrication d'une tuyère de propulseur dans lequel la tuyère est fabriquée à partir d'une résine phénolique obtenue par mise en oeuvre d'un procédé de fabrication comportant les étapes suivantes :

   a) réduction d'un composé de formule A afin d'obtenir un alcool hydroxybenzylique de formule B, les formules A et B étant les suivantes :

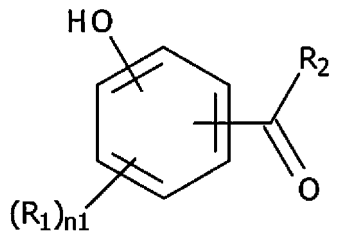

A

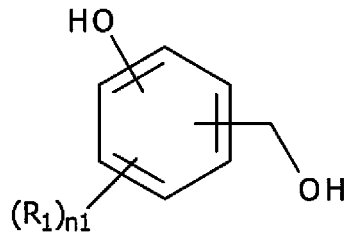

B

   où :

   - $n_1$ est un entier compris entre 0 et 4 et lorsque $n_1$ est supérieur ou égal à 2, les substituants $R_1$ sont identiques ou différents,
   - $R_1$ est choisi parmi : -OH, -COOH, -CHO, les groupements - O-Alk où Alk désigne une chaîne alkyle substituée ou non substituée de 1 à 4 atomes de carbone, les chaînes hydrocarbonées comprenant entre 1 et 20 atomes de carbone, saturées ou insaturées, substituées ou non substituées, interrompues ou non par un ou plusieurs hétéroatomes, et présentant ou non une ou plusieurs fonctions carbonyle ou acide carboxylique, les groupes carbocycliques ou hétérocycliques saturés, insaturés ou aromatiques, monocycliques ou polycycliques, substitués ou non substitués, et présentant ou non une ou plusieurs fonctions carbonyle ou acide carboxylique, les groupements aryles substitués ou non substitués et présentant ou

non une ou plusieurs fonctions carbonyle ou acide carboxylique, et
- $R_2$ désigne -H ou -OH, et

b) réaction de polymérisation mettant en oeuvre l'alcool hydroxybenzylique de formule B obtenu lors de l'étape a) afin d'obtenir la résine phénolique.

2. Procédé selon la revendication 1, **caractérisé en ce qu'**il y a homopolymérisation de l'alcool hydroxybenzylique de formule B lors de l'étape b).

3. Procédé selon la revendication 1, **caractérisé en ce qu'**il y a réaction de l'alcool hydroxybenzylique de formule B avec un aldéhyde différent du formaldéhyde lors de l'étape b).

4. Procédé selon la revendication 3, **caractérisé en ce que** l'aldéhyde est choisi parmi le benzaldéhyde, le téréphthalaldéhyde, le trimésaldéhyde ou présente l'une des deux formules C ou D suivantes :

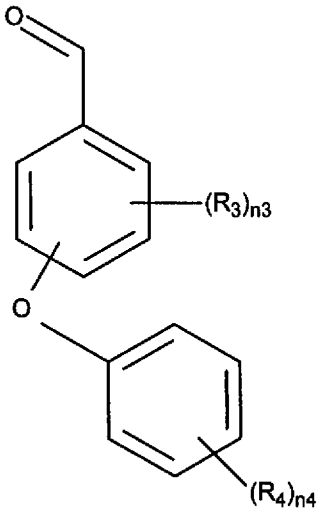

C

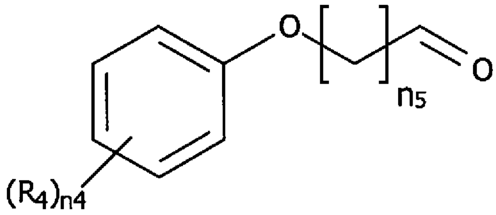

D

dans les formules C et D, $n_3$ est un entier compris entre 0 et 4 et lorsque $n_3$ est supérieur ou égal à 2, les substituants $R_3$ sont identiques ou différents, $n_4$ est un entier compris entre 0 et 5 et lorsque $n_4$ est supérieur ou égal à 2, les substituants $R_4$ sont identiques ou différents et $n_5$ est un entier compris entre 1 et 6, et les substituants $R_3$ et $R_4$ étant choisis indépendamment l'un de l'autre parmi : -OH, -COOH, -CHO, les groupements -O-Alk où Alk désigne une chaîne alkyle substituée ou non substituée de 1 à 4 atomes de carbone, les chaînes hydrocarbonées comprenant entre 1 et 20 atomes de carbone, saturées ou insaturées, substituées ou non substituées, interrompues ou non par un ou plusieurs hétéroatomes, et présentant ou non une ou plusieurs fonctions carbonyle ou acide carboxylique, les groupes carbocycliques ou hétérocycliques saturés, insaturés ou aromatiques, monocycliques ou polycycliques, substitués ou non substitués, et présentant ou non une ou plusieurs fonctions carbonyle ou acide carboxylique, les groupements aryles substitués ou non substitués et présentant ou non une ou plusieurs fonctions carbonyle ou acide carboxylique, $R_4$ désignant, en outre, ou non un radical de formule C1 dans la formule C ci-dessus ou un radical de formule D1 dans la formule D ci-dessus et $R_3$ désignant, en outre, ou non un radical de formule C2 dans la formule C ci-dessus, les formules C1, C2 et D1 étant les suivantes :

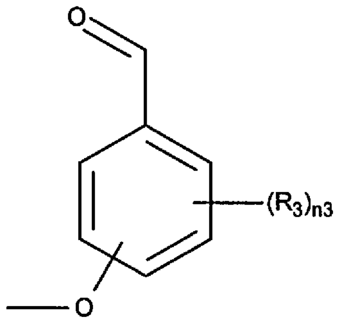

C1

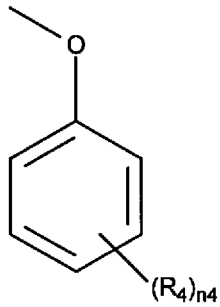

C2

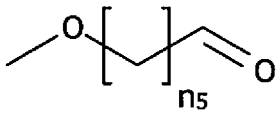

D1

5. Procédé selon la revendication 1, **caractérisé en ce qu'**il y a, lors de l'étape b), réaction de l'alcool hydroxybenzylique de formule B avec un composé phénolique différent dudit alcool hydroxybenzylique.

6. Procédé selon l'une quelconque des revendications 1 à 5, **caractérisé en ce que** $R_2$ désigne -OH et **en ce que** le composé de formule A est formé, avant l'étape a), par une réaction de carboxylation de Kolbe-Schmitt à partir d'un composé de formule A1, la formule A1 étant la suivante :

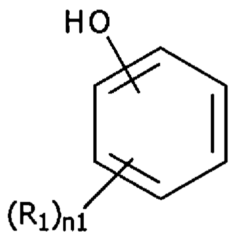

A1

dans la formule A1, $R_1$ et $n_1$ sont tels que définis plus haut.

7. Procédé selon l'une quelconque des revendications 1 à 5, **caractérisé en ce que** $R_2$ désigne -H et **en ce que** le composé de formule A est formé, avant l'étape a), par une réaction de formylation d'un composé de formule A1 ou par une réaction d'oxydation d'un composé de formule A2, les formules A1 et A2 étant les suivantes :

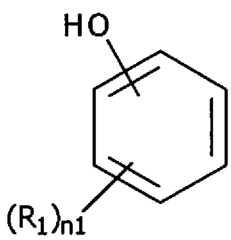

A1

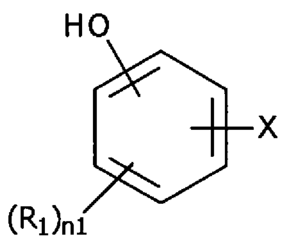

A2

dans la formule A2, X est un groupement formant -CHO après une réaction d'oxydation et, dans les formules A1 et A2, $R_1$ et $n_1$ sont tels que définis plus haut.

8. Procédé selon l'une quelconque des revendications 6 et 7, **caractérisé en ce que** le composé de formule A1 ou A2 est choisi parmi : les phénols simples, les composés polyphénoliques, les aldéhydes hydroxybenzoïques, les acides hydroxybenzoïques, les alcools hydroxybenzyliques, les alcools hydroxycinnamyliques, les acides hydroxycinnamiques, les phénylpropènes, les coumarines, les naphtoquinones, les stilbénoïdes, les flavonoïdes, les iso-flavonoïdes, les anthocyanes, les lignanes, les lignines, les tanins condensés, les tanins hydrolysables, les tanins dépolymérisés et les résines résoles et novolaques.

**9.** Procédé selon l'une quelconque des revendications 1 à 8, **caractérisé en ce que** $R_1$ est choisi parmi : -OH, -OAlk où Alk désigne une chaîne alkyle substituée ou non substituée de 1 à 4 atomes de carbone, - CHO, -COOH et les groupements aryles substitués ou non substitués et présentant ou non une ou plusieurs fonctions carbonyle ou acide carboxylique.

**10.** Procédé selon l'une quelconque des revendications 1 à 9, **caractérisé en ce que** $n_1$ est compris entre 0 et 3.

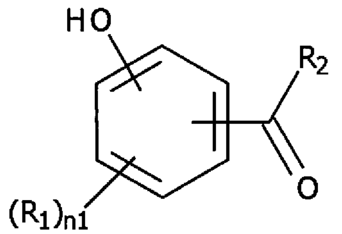

A

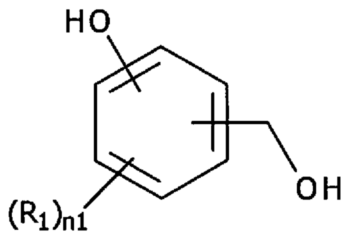

B

## Patentansprüche

**1.** Verfahren zur Herstellung einer Triebwerksdüse, bei dem die Düse aus einem Phenolharz hergestellt wird, das durch Ausführen eines Herstellungsverfahrens erhalten wird, das die folgenden Schritte umfasst:

a) Reduzieren einer Verbindung der Formel A, um einen Hydroxybenzylalkohol der Formel B zu erhalten, wobei die Formeln A und B die folgenden sind:

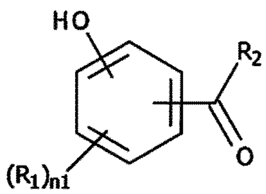

A

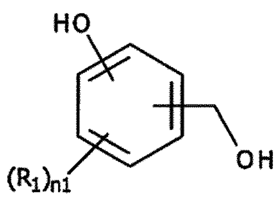

B

wobei:

- $n_1$ eine ganze Zahl zwischen 0 und 4 ist, und wenn $n_1$ größer oder gleich 2 ist, die Substituenten $R_1$ gleich oder verschieden sind,
- $R_1$ ausgewählt ist aus: -OH, -COOH, -CHO, -O-Alk-Gruppen, worin Alk eine substituierte oder unsubstituierte Alkylkette mit 1 bis 4 Kohlenstoffatomen bezeichnet, Kohlenwasserstoffketten mit 1 bis 20 Kohlenstoffatomen, gesättigt oder ungesättigt, substituiert oder unsubstituiert, durch ein oder mehrere Heteroatome unterbrochen oder nicht, und mit oder ohne eine oder mehrere Carbonyl- oder Carbonsäurefunktionen, gesättigten, ungesättigten oder aromatischen, monocyclischen oder polycyclischen, substituierten oder unsubstituierten carbocyclischen oder heterocyclischen Gruppen, die eine oder mehrere Carbonyl- oder Carbonsäurefunktionen aufweisen oder nicht, substituierten oder unsubstituierten Arylgruppen mit oder ohne eine oder mehrere Carbonyl- oder Carbonsäurefunktionen,

- $R_2$ -H oder -OH bezeichnet, und

b) Polymerisationsreaktion unter Verwendung des in Schritt a) erhaltenen Hydroxybenzylalkohols der Formel B, um das Phenolharz zu erhalten.

**2.** Verfahren nach Anspruch 1, **dadurch gekennzeichnet, dass** der Hydroxybenzylalkohol der Formel B in Schritt b) homopolymerisiert wird.

**3.** Verfahren nach Anspruch 1, **dadurch gekennzeichnet, dass** in Schritt b) Hydroxylbenzylalkohol der Formel B mit einem von Formaldehyd verschiedenen Aldehyd zur Reaktion gebracht wird.

**4.** Verfahren nach Anspruch 3, **dadurch gekennzeichnet, dass** der Aldehyd ausgewählt ist aus Benzaldehyd, Terephthalaldehyd, Trimesaldehyd oder eine der folgenden beiden Formeln C oder D aufweist:

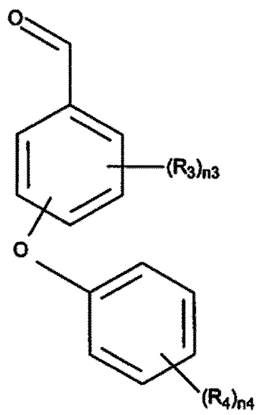

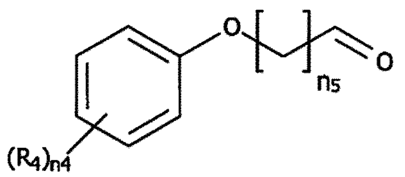

D

C

wobei in den Formeln C und D $n_3$ eine ganze Zahl zwischen 0 und 4 ist, und wenn $n_3$ größer oder gleich 2 ist, die Substituenten $R_3$ identisch oder verschieden sind, $n_4$ eine ganze Zahl zwischen 0 und 5 ist, und wenn $n_4$ größer oder gleich 2 ist, die Substituenten $R_4$ identisch oder verschieden sind, und $n_5$ eine ganze Zahl zwischen 1 und 6 ist, und die Substituenten $R_3$ und $R_4$ unabhängig voneinander ausgewählt sind aus : -OH, -COOH, -CHO, -O-Alk-Gruppen, worin Alk eine substituierte oder unsubstituierte Alkylkette mit 1 bis 4 Kohlenstoffatomen bezeichnet, Kohlenwasserstoffketten mit 1 bis 20 Kohlenstoffatomen, gesättigt oder ungesättigt, substituiert oder unsubstituiert, durch ein oder mehrere Heteroatome unterbrochen oder nicht, und mit oder ohne eine oder mehrere Carbonyl- oder Carbonsäurefunktionen, gesättigten, ungesättigten oder aromatischen, monocyclischen oder polycyclischen, substituierten oder unsubstituierten carbocyclischen oder heterocyclischen Gruppen, die eine oder mehrere Carbonyl- oder Carbonsäurefunktionen aufweisen oder nicht, substituierten oder unsubstituierten Arylgruppen mit oder ohne eine oder mehrere Carbonyl- oder Carbonsäurefunktionen,

wobei $R_4$ auch einen Rest der Formel C1 in der obigen Formel C oder einen Rest der Formel D1 in der obigen Formel D bezeichnet oder nicht und $R_3$ auch einen Rest der Formel C2 in der obigen Formel C bezeichnet oder nicht, wobei die Formeln C1, C2 und D1 die folgenden sind:

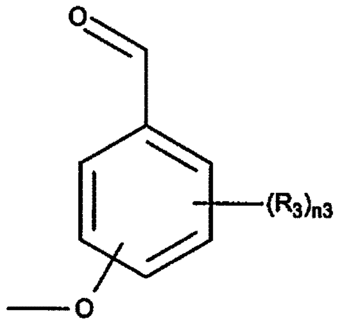

C1

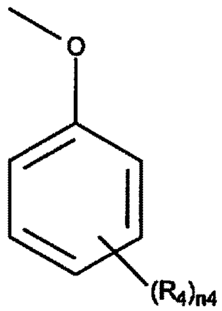

C2

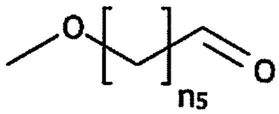

D1

5. Verfahren nach Anspruch 1, **dadurch gekennzeichnet, dass** in Schritt b) Hydroxybenzylalkohol der Formel B mit einer vom Hydroxybenzylalkohol verschiedenen Phenolverbindung zur Reaktion gebracht wird.

6. Verfahren nach einem der Ansprüche 1 bis 5, **dadurch gekennzeichnet, dass** $R_2$ -OH bezeichnet und dass die Verbindung der Formel A vor Schritt a) durch eine Kolbe-Schmitt-Carboxylationsreaktion aus einer Verbindung der Formel A1 gebildet wird, wobei die Formel A1 die folgende ist:

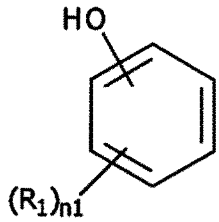

A1

wobei in der Formel A1 $R_1$ und $n_1$ wie oben definiert sind.

7. Verfahren nach einem der Ansprüche 1 bis 5, **dadurch gekennzeichnet, dass** $R_2$ -H bezeichnet und dass die Verbindung der Formel A vor Schritt a) durch eine Formylierungsreaktion einer Verbindung der Formel A1 oder durch eine Oxidationsreaktion einer Verbindung der Formel A2 gebildet wird, wobei die Formeln A1 und A2 die folgenden sind:

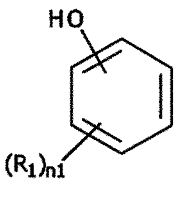

A1

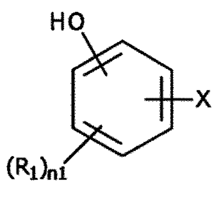

A2

wobei in Formel A2 X eine -CHO bildende Gruppe nach einer Oxidationsreaktion ist und in den Formeln A1 und A2 $R_1$ und $n_1$ wie oben definiert sind.

8. Verfahren nach einem der Ansprüche 6 bis 7, **dadurch gekennzeichnet, dass** die Verbindung der Formel A1 oder A2 ausgewählt ist aus: einfachen Phenolen, polyphenolischen Verbindungen, Hydroxybenzoaldehyden, Hydroxybenzoesäuren, Hydroxybenzylalkoholen, Hydroxycinnamylalkoholen, Hydroxycinnamsäuren, Phenylpropenen, Cumarinen, Naphthochinonen, Stilbenoiden, Flavonoiden, Isoflavonoiden, Anthocyanen, Lignanen, Ligninen, kondensierten Tanninen, hydrolysierbaren Tanninen, depolymerisierten Tanninen und Resol- und Novolakharzen.

**9.** Verfahren nach einem der Ansprüche 1 bis 8 , **dadurch gekennzeichnet, dass** $R_1$ ausgewählt ist aus: -OH, -O-Alk, worin Alk eine substituierte oder unsubstituierte Alkylkette mit 1 bis 4 Kohlenstoffatomen bezeichnet, - CHO, -COOH und substituierten oder unsubstituierten Arylgruppen mit oder ohne eine oder mehrere Carbonyl- oder Carbonsäurefunktionen.

**10.** Verfahren nach einem der Ansprüche 1 bis 9 , **dadurch gekennzeichnet, dass** $n_1$ zwischen 0 und 3 liegt.

## Claims

**1.** A method for producing a propulsion nozzle, wherein the nozzle is produced from a phenolic resin obtained by carrying out a production method comprising the following steps:

a) reduction of a compound of formula A in order to obtain a hydroxybenzyl alcohol of formula B, formulae A and B being the following:

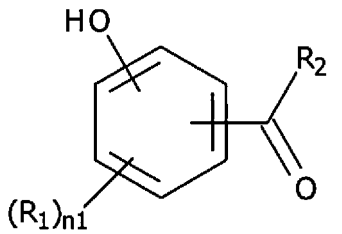

A

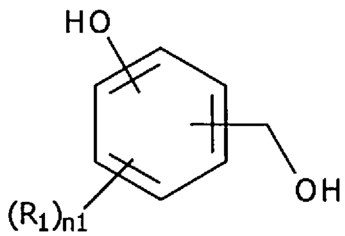

B

wherein:

- $n_1$ is an integer between 0 and 4 and when $n_1$ is greater than or equal to 2, the substituents $R_1$ are identical or different,
- $R_1$ is chosen from: -OH, -COOH, -CHO, the groups -O-Alk wherein Alk denotes a substituted or unsubstituted alkyl chain of 1 to 4 carbon atoms, saturated or unsaturated, substituted or unsubstituted hydrocarbon-based chains comprising between 1 and 20 carbon atoms, interrupted or not with one or more heteroatoms, and having or not having one or more carbonyl or carboxylic acid functions, substituted or unsubstituted, monocyclic or polycyclic, saturated, unsaturated or aromatic carbocyclic or heterocyclic groups having or not having one or more carbonyl or carboxylic acid functions, and substituted or unsubstituted aryl groups having or not having one or more carbonyl or carboxylic acid functions, and
- $R_2$ denotes -H or -OH, and

b) polymerization reaction using the hydroxybenzyl alcohol of formula B obtained during step a) in order to obtain the phenolic resin.

**2.** The method as claimed in claim 1, **characterized in that** there is homopolymerization of the hydroxybenzyl alcohol of formula B during step b).

**3.** The method as claimed in claim 1, **characterized in that** there is reaction of the hydroxybenzyl alcohol of formula B with an aldehyde other than formaldehyde during step b).

**4.** The method as claimed in claim 3, **characterized in that** the aldehyde is chosen from benzaldehyde, terephthalaldehyde and trimesaldehyde or has one of the following two formulae C or D:

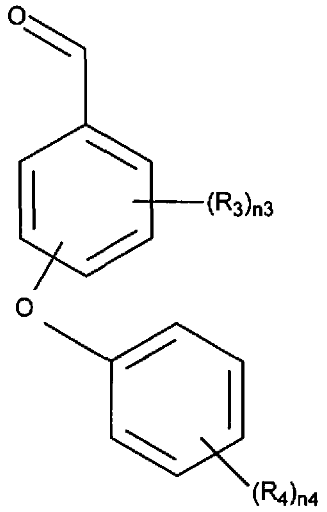

C

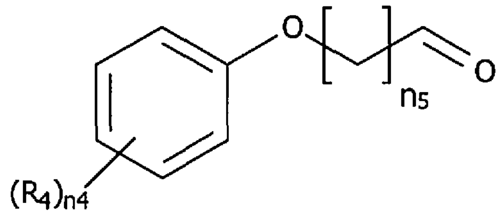

D

in formulae C and D, $n_3$ is an integer between 0 and 4 and when $n_3$ is greater than or equal to 2, the substituents $R_3$ are identical or different, $n_4$ is an integer between 0 and 5 and when $n_4$ is greater than or equal to 2, the substituents $R_4$ are identical or different and $n_5$ is an integer between 1 and 6, the substituents $R_3$ and $R_4$ being chosen independently from one another from: -OH, -COOH, -CHO, the groups -O-Alk wherein Alk denotes a substituted or unsubstituted alkyl chain of 1 to 4 carbon atoms, saturated or unsaturated, substituted or unsubstituted hydrocarbon-based chains comprising between 1 and 20 carbon atoms, interrupted or not with one or more heteroatoms, and having or not having one or more carbonyl or carboxylic acid functions, substituted or unsubstituted, monocyclic or polycyclic, saturated, unsaturated or aromatic carbocyclic or heterocyclic groups having or not having one or more carbonyl or carboxylic acid functions, and substituted or unsubstituted aryl groups having or not having one or more carbonyl or carboxylic acid functions,

$R_4$ also denoting or not denoting a radical of formula C1 in formula C above or a radical of formula D1 in formula D above and $R_3$ also denoting or not denoting a radical of formula C2 in formula C above, formulae C1, C2 and D1 being the following:

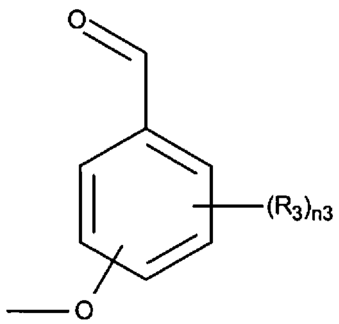

C1

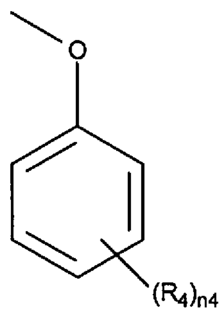

C2

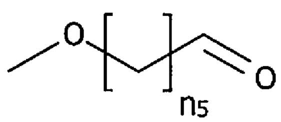

D1

5. The method as claimed in claim 1, **characterized in that** there is, during step b), reaction of the hydroxybenzyl alcohol of formula B with a phenolic compound other than said hydroxybenzyl alcohol.

6. The method as claimed in any one of claims 1 to 5, **characterized in that** $R_2$ denotes -OH and **in that** the compound

of formula A is formed, before step a), by a Kolbe-Schmitt carboxylation reaction using a compound of formula A1, the formula A1 being the following:

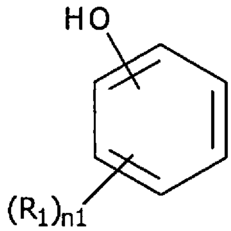

A1

in the formula A1, $R_1$ and $n_1$ are as defined above.

7. The method as claimed in any one of claims 1 to 5, **characterized in that** $R_2$ denotes -H and **in that** the compound of formula A is formed, before step a), by a reaction for formylation of a compound of formula A1 or by a reaction for oxidation of a compound of formula A2, the formulae A1 and A2 being the following:

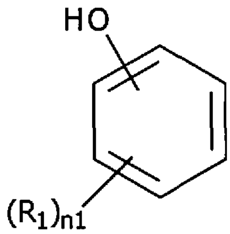

A1

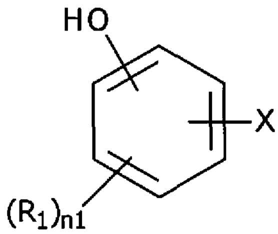

A2

in the formula A2, X is a group forming -CHO after an oxidation reaction and, in the formulae A1 and A2, $R_1$ and $n_1$ are as defined above.

8. The method as claimed in either one of claims 6 and 7, **characterized in that** the compound of formula A1 or A2 is chosen from: simple phenols, polyphenolic compounds, hydroxybenzoic aldehydes, hydroxybenzoic acids, hydroxybenzyl alcohols, hydroxycinnamyl alcohols, hydroxycinnamic acids, phenylpropenes, coumarins, naphthoquinones, stilbenoids, flavonoids, isoflavonoids, anthocyans, lignans, lignins, condensed tannins, hydrolyzable tannins, depolymerized tannins, and resol and novolac resins.

9. The method as claimed in any one of claims 1 to 8, **characterized in that** $R_1$ is chosen from: -OH, -O-Alk wherein Alk denotes a substituted or unsubstituted alkyl chain of 1 to 4 carbon atoms, -CHO, -COOH, and substituted or unsubstituted aryl groups having or not having one or more carbonyl or carboxylic acid functions,

10. The method as claimed in any one of claims 1 to 9, **characterized in that** $n_1$ is between 0 and 3.

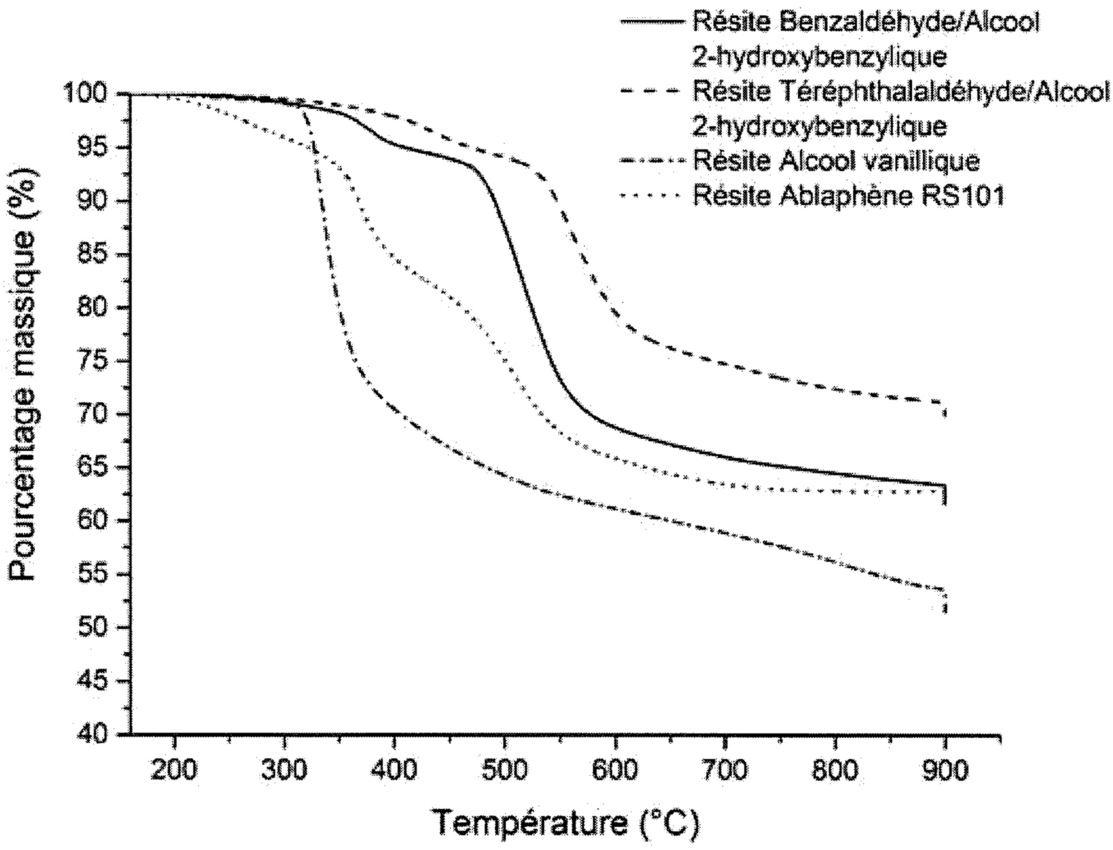
Résite Benzaldéhyde/Alcool 2-hydroxybenzylique
Résite Téréphthalaldéhyde/Alcool 2-hydroxybenzylique
Résite Alcool vanillique
Résite Ablaphène RS101
Pourcentage massique (%)
100
95
90
85
80
75
70
65
60
55
50
45
40
200
300
400
500
600
700
800
900
Température (°C)

FIG.1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 2010316555 A


### Littérature non-brevet citée dans la description


- **E.C. RAMIRES ; J.D. MEGIATTO ; C. GARDRAT ; A. CASTELLAN ; E. FROLLINI.** Biobased composites from glyoxal-phenolic resins and sisal fibers. *Bioresour. Technol.,* 2010, vol. 101, 1998-2006
- **L.H. BROWN.** Resin-forming reactions of furfural and phenol. *J. Ind. Eng. Chem.,* 1952, vol. 44, 2673-2675
- **DE S. REN ; Z. WU ; Q. GUO ; B. SHEN.** Zeolites as Shape-Selective Catalysts : Highly Selective Synthesis of Vanillin from Reimer-Tiemann Reaction of Guaiacol and Chloroform. *Catal Lett,* 2014, 1